**Europäisches Patentamt**

**European Patent Office**

**Office européen des brevets**

(19)

(11) Publication number : **0 435 099 B1**

# (12) EUROPEAN PATENT SPECIFICATION

(45) Date of publication of patent specification :
18.10.95 Bulletin 95/42

(51) Int. Cl.⁶ : **G06F 15/80**

(21) Application number : **90124142.2**

(22) Date of filing : **13.12.90**

(54) A method of selecting characteristics data for a data processing system.

(30) Priority : **25.12.89 JP 335960/89**

(43) Date of publication of application :
**03.07.91 Bulletin 91/27**

(45) Publication of the grant of the patent :
**18.10.95 Bulletin 95/42**

(84) Designated Contracting States :
**BE DE FR GB IT NL SE**

(56) References cited :
HANDBOOK OF PATTERN RECOGNITION
AND IMAGE PROCESSING 1986, SAN DIEGO,
US pages 59 - 83 T.Y.YOUNG & K.-S. FU (EDS)
'Chapter 3 Feature Selection and Extraction'
COMPUTER VISION GRAPHICS AND IMAGE
PROCESSING vol. 42, no. 3, June 1988,
DULUTH, MA US pages 318 - 333 ,
XP000028969 H.S. BAIRD 'Feature Identification for Hybrid Structural/Statistical Pattern
Classification'
IEEE TRANSACTIONS ON PATTERN
ANALYSIS AND MACHINE INTELLIGENCE
vol. 11, no. 3, March 1989, NEW YORK US
pages 304 - 314 , XP000003438 E. SAUND
'Dimensionality-Reduction Using Connection-
ist Networks'

(73) Proprietor : **YOZAN INC.**
**2-22-2, Koishikawa,**
**Bunkyo-ku**
**Tokyo 112 (JP)**
Proprietor : **SHARP KABUSHIKI KAISHA**
**22-22 Nagaike-cho**
**Abeno-ku**
**Osaka 545 (JP)**

(72) Inventor : **Takatori, Sunao**
**c/o Yozan Inc.., 2-22-2,**
**Koishikawa**
**Bunkyo-ku Tokyo 112 (JP)**
Inventor : **Kumagai, Ryohei**
**c/o Yozan Inc., 2-22-2, Koishikawa**
**Bunkyo-ku. Tokyo 112 (JP)**
Inventor : **Matsumoto, Koji**
**c/o Yozan Inc., 2-22-2, Koishikawa**
**Bunkyo-ku, Tokyo 112 (JP)**
Inventor : **Yamamoto, Makoto**
**c/o Yozan Inc., 2-22-2,**
**Koishikawa**
**Bunkyo-ku, Tokyo 112 (JP)**

(74) Representative : **Grünecker, Kinkeldey,**
**Stockmair & Schwanhäusser Anwaltssozietät**
**Maximilianstrasse 58**
**D-80538 München (DE)**

## Description

## FIELD OF THE INVENTION

The present invention relates to a method of selecting characteristics data for a data processing system from a group of input data for reducing data volume of each input data by said data processing system having structure of a neural network or the structure equivalent thereto, where an input data consists of a plurality of said characteristics data.

## PRIOR ARTS

The neural network, as is generally and conventionally known, is comprised with neurons prepared in parallel in layers. According to each neuron, output data O are output corresponding to the comparison results between the sum of multiplied input data from outside I1, I2, I3...In by weights W1, W2, W3...Wn and threshold $\theta$ . Various comparison methods are possible. For example, as to normalization function 1 [ f ] , output data O can be expressed as:

$$O = 1 [\Sigma W_n \cdot I_n - \theta]$$

Here, when $\Sigma W_n \cdot I_n$ exceeds a threshold $\theta$, output data becomes "1", and when $\Sigma W_n \cdot I_n$ is less than threshold $\theta$, it becomes "0".

As mentioned above, neurons output "1" or "0" in response to input data. The ignition pattern of the above neurons; that is, which one of neurons ignites, is depending on input data.

Conventionally, a method for the recognition of characters by the neural network is disclosed in which characteristics data of characters (for example, number of end points, number of branch points, etc.) are calculated so as to judge which character the above characteristics data corresponds to.

Document HANDBOOK OF PATTERN RECOGNITION AND IMAGE PROCESSING 1986, SAN DIEGO, US pages 59 - 83 T.Y.YOUNG & K.-S. FU (EDS) 'Chapter 3 Feature Selection and Extraction' * Part III FEATURE-SET SEARCH ALGORITHMS * discloses a pattern recognition system provided with mathematical tools for reducing the dimensionality of pattern representation. With the help of a branch-and-bound algorithm it is possible to determine an optimal feature set without explicit evaluation of all the possible combinations of d measurements. Said algorithm being applicable under the assumption that a feature selection criterion satisfies the monotonicity property.

In document COMPUTER VISION GRAPHICS AND IMAGE PROCESSING vol. 42, no. 3, June 1988, DULUTH, MA US pages 318 - 333 , XP000028969 H.S. BAIRD 'Feature Identification for Hybrid Structural/Statistical Pattern Classification' a technique for combining the strengths of structural shape analysis with statistical classification is proposed, wherein a function is constructed, which is called a feature identification mopping. If a certain continuity property holds for the parameterizations of the structural shape-types, then it is possible to infer the mapping automatically inference is slow and heuristic, but highly automated, controlled by only a few statistical parameters, and uniformly applicable to all shape types.

Dimensionality - reduction using connectionist networks is disclosed by document IEEE TRANSACTIONS ON PATTERN ANALYSIS AND MACHINE INTELLIGENCE vol. 11, no. 3, March 1989, NEW YORK US pages 304 - 314 , XP000003438 E. SAUND 'Dimensionality-Reduction Using Connectionist Networks' to discover a particular type of constraint in multidimensional data. Namely a connectionist dimensionality reducer is disclosed by means of which two-dimensional data are constrained to lie on a one-dimensional constraint surface. The extent to which locations indicated by output activity computed by the network, when the input is drawn from points on the constraint curve, lie on the curve simply demonstrates that network output conforms to input. The knowledge about constraint on the data source reflected in data samples is contained in the weights between units in successive layers of the network, the shape of the constraint surface remaining implicit in the weight connections.

Not only in the above character recognition, recognition accuracy is an important factor for the above data processing system how accurately an input data consisting of a plurality of characteristics data can be recognized. Also, an efficiency is essential for a practical system how the above recognition function is realized with minimum neural network. According to the above conventional example, it is provided to use the effective characteristics data for the printed Japanese characters. However, it is unknown what characteristics data are effective for hand writing characters, running style writing characters, European hand writings, special characters such as an Arabic, etc. The more characteristics data are applied, the bigger the scale of data processing system becomes.

The present invention is invented so as to solve the above problems of the prior art and has an object to provide a method of selecting characteristics for the case when focusing of effective characteristics data is not possible.

A method of selecting characteristics data for a data processing system according to the present invention comprises steps of:

storing outputs of said input data;

selecting a specific characteristics data of a pair of different input data;

exchanging said characteristics data of said input data pair with each other;

comparing outputs from said data processing system in response to said input data before and after the exchange of said characteristics data; and

removing said characteristics data from said input data in said group, when a difference between said outputs before and after is comparatively small.

## BRIEF DESCRIPTION OF THE DRAWINGS

Fig.1 shows a flow chart indicating the selection method of the effective characteristics data according to an embodiment of the present invention;

Fig.2 shows a block diagram indicating a structure example of a recognition system according to the present invention method;

Fig.3 (a) and (b) show diagrams indicating the examples of ignition patterns of neurons according to the neural network at output side;

Fig.4 shows a diagram indicating the characters' groups and their density projections.

Hereinafter, the present invention is described according to an embodiment with referring to the attached drawings.

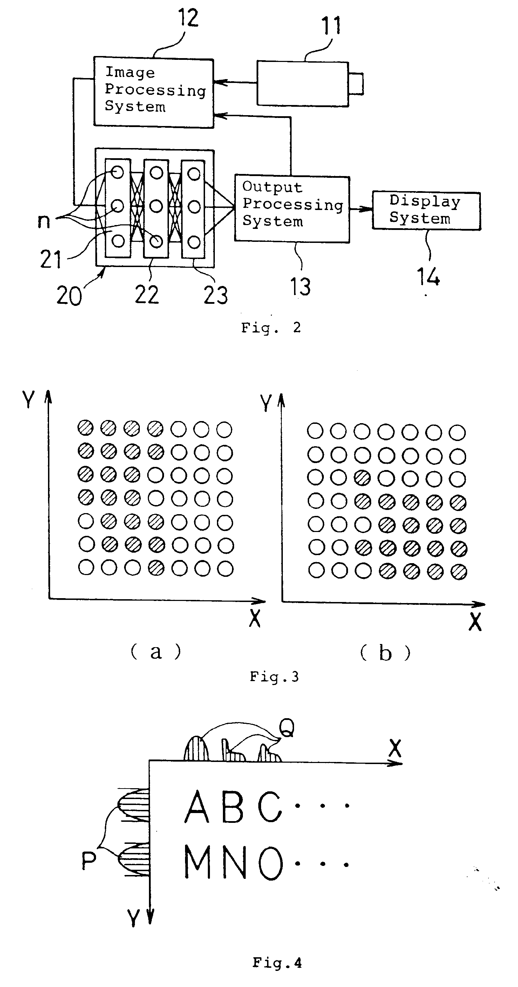

Fig.2 shows a structure of a character recognition system as an example of a data processing system according to the present invention, in which characters are input from a video camera 11. The characteristics data of input characters, i.e., number of end points, number of branch points, etc., are calculated at an image processing system 12. Here, since the calculation manner is well-known, explanation is omitted. An image processing system 12 is connected to a computer 20 with a structure of neural network in which character recognition is performed by using characteristics data of characters. The above computer 20 recognizes characters by investigating which of input characteristics data is closely resemble to which characteristics data of a character. A recognized character is input to an output processing system 13 in which it is converted to a predetermined data format so as to be displayed by a display system 14. A display system 14, comprising CRT, for example, displays the recognized characters onto an image.

An output processing system 13 is also connected to the image processing system 12, and is structured to output ignition pattern of neurons outside of a computer 20 to image processing system 12 as it is described later, so that image processing system 12 performs the selection of characteristics data of a character.

A computer 20 is structured with a neural network as described above, in Fig.2, structure of the neural network is schematically indicated. As it is understood from the figure, the neural network according to the present embodiment comprises 3 neural layers 21, 22 and 23 that are comprised by a plurality of neurons n, respectively. Each neuron n of neural layer 21 at input side is connected to each neuron n of neural layer 22 in the middle of layers, respectively. Each neuron n of neural layer 22 in the middle layer is connected to each neurons n of neural layer 23 at output side, respectively, similarly to the above.

Each neuron comprising, for example, an operational amplifier, outputs according to the comparison results between the sum of each multiplied input data by weights and threshold, as it is described above. Accordingly, neuron n, for example, ignites and outputs "1" when the sum exceed the threshold; and outputs "0" when the sum is smaller than threshold.

Fig.3 (a) and (b) show neurons of neural layer 23 at output side by x and y coordinates. In the figure, igniting neurons are shown by black circles; and other neurons are shown by white circles. Here, it is assumed that Fig.3 (a) shows the ignition pattern of neurons of neural layer 23 when input character from a camera 11 is "A"; and Fig.3 (b) shows the ignition pattern of neurons when input character is "B". As it is understood from the figure, more neurons at the left than that of at the right are ignited with respect to "A", and more neurons at the right are ignited with respect "B". As mentioned above, ignition pattern is changed in accordance with the data input to the neural layer.

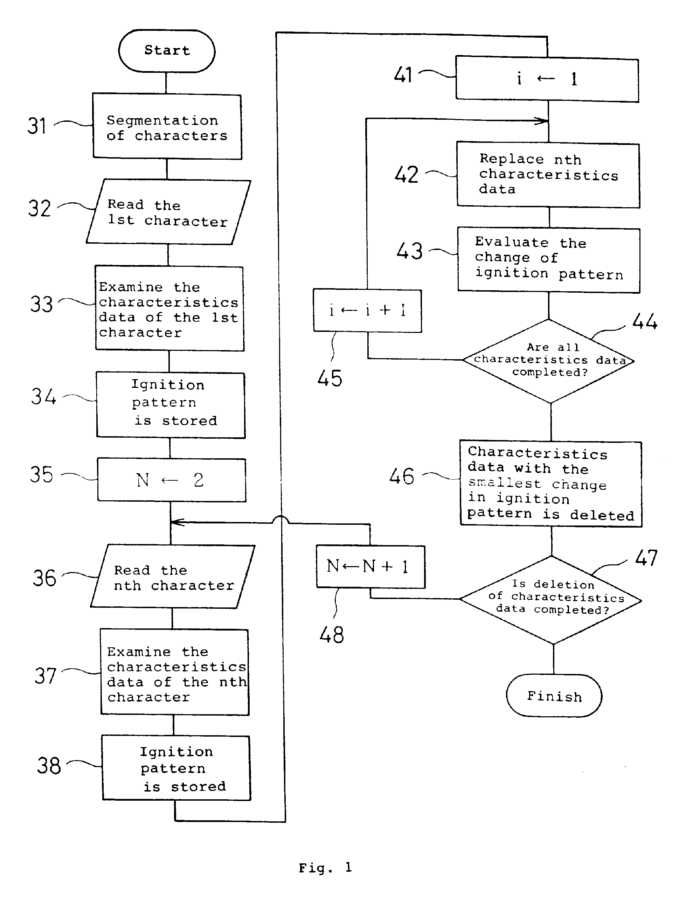

Fig.1 shows an example of a character recognition method performed by a recognition system of Fig.2; that is, an embodiment according to the present invention.

At step 31, character segmentation is performed at an image processing system 12 for the segmentation of each character among a plurality of input characters' group. According to the present embodiment, character segmentation is performed at step 31 for the recognition processing regarding to one character among a plurality of characters photographed by a camera 11 at one time. As shown in Fig.4, for example, characters' groups "A B C..." and "M N O..." are arranged on the first and second raw, respectively, where x and y coordinates are defined to be horizontal and vertical, respectively. The breaks between character strings are detected by calculating the density projections with respect to y coordinate as shown by reference P. Then the breaks between characters are detected by calculating the density projections with respect to x coordinate as shown by reference Q. After the above processing, Feret's diameter is calculated. Then, noise processing and labeling in the above Feret's diameters are performed so as to segment each character.

At step 32, the 1st character, i.e. "A" in Fig. 4, is read. As the characteristics data of a character, there are "number of end points", "number of branch points", "number of holes", "number of groups", "stroke", "density projection" and "circleness". At step 33, the above 7 characteristics are calculated with respect to the 1st character. These characteristics data are calculated at an image processing system 12 by well-known methods, and stored to a memory of a system 12 as well as input to a computer 20. The ignition pattern in the neural layer 23 at the output side when the above characteristics data are input is stored at step 34.

At step 35, parameter "N" is determined to be "2". At step 36, Nth, i.e. the 2nd, character is read in the same manner as at step 32. At step 37, the above 7 characteristics data are calculated with respect to the 2nd character. These characteristics data are stored in a memory of image processing system 12, as well as input to the computer 20. At step 38, the ignition pattern of the 2nd character is stored at step 34.

At step 41, parameter "i" is determined to be "1". At step 42, the ith, i.e. the 1st, characteristics data (for example, "number of end points") among characteristics data of the 1st character ("A") is replaced with the 1st characteristics data of the second character ("B"). That is, only the 1st characteristics of the 1st character is replaced with that of the 2nd character. According to the above replacement of a characteristics data, the ignition pattern of neurons in neural layer 23 at output side is changed from the original ignition pattern. Therefore, the ignition pattern in Fig.3 (a) is changed. At step 43, the change in the ignition pattern is evaluated. As to the evaluation of the change in the ignition pattern is described in later.

At step 44, examination of whether steps 42 and 43 are performed onto all characteristics data or not is performed. Here, when processings of steps 42 and 43 for all characteristics data are completed, step 43 is performed. When they are not completed, a parameter "i" at step 45 is increased by 1, then steps 42 and 43 are repeated. Accordingly, the next characteristics data (for example, number of branch points) among characteristics data of the 1st character ("A") is replaced with corresponding characteristics data of the 2nd character ("B"), so that the change in the ignition pattern is evaluated.

After the change in the ignition pattern for the above 7 characteristics data is evaluated, a characteristics data with the least changes in the ignition pattern when it is replaced; that is, a characteristics data which exerts less influences onto the change in ignition pattern, is selected.

Hereinafter, evaluation of the change in ignition pattern performed at step 43 is described. The evaluation of the change in ignition pattern is performed by, for example, comparing the density deviation within a class and the deviation between classes.

Accordingly, the ignition pattern is expressed by a plane with x and y coordinates as Fig.3 (a) and (b), so as to obtain x and y coordinates of ignited neurons. For example, when an input character is "A", the density deviation within a class $V_{XA}$ according to x coordinate becomes:

$$V_{XA} = \Sigma (X_A - \overline{X}_A)^2 \quad (1)$$

where $X_A$ is a x coordinate of each ignited neuron, and

$\overline{X}_A$ is a mean value of x coordinates of all ignited neurons. Similar to the above, the density deviation within a class according to y coordinate $V_{YA}$ becomes:

$$V_{YA} = \Sigma (Y_A - \overline{Y}_A)^2 \quad (2)$$

At step 42, the density deviations within a class with respect to x and y coordinates are calculated according to the ignition pattern when a characteristics data is replaced. In this case, the density deviation within a class according to x coordinate $V_{XB}$ becomes:

$$V_{XB} = \Sigma (X_B - \overline{X}_B)^2 \quad (3)$$

The density deviation within a class according to y coordinate $V_{YB}$ becomes:

$$V_{YB} = \Sigma (Y_B - \overline{Y}_B)^2 \quad (4)$$

Then the density deviation between classes is calculated between the ignition pattern of a character "A" and the ignition pattern when one of characteristics data is replaced. Here, calculation with respect to ignited neurons under at least one of the above occasion is performed. Here, the density deviation within a class according to x coordinate $V_{XT}$ is:

$$V_{XT} = \Sigma (X_T - \overline{X}_T)^2 \quad (5)$$

The density deviation within a class according to y coordinate $V_{YB}$ is:

$$V_{YB} = \Sigma (Y_B - \overline{Y}_B)^2 \quad (6)$$

The ratio between the density deviation within a class and the density deviation between classes is defined as the deviation ratio. The deviation ratio in x coordinate is calculated according to the formulas (1), (3) and (5), as follows:

$$F_X = V_{XT}/(V_{XA} \times V_{XB}) \quad (7)$$

The deviation ratio in y coordinate is calculated according to the formulas (2), (4) and (6), as follows:

$$F_Y = V_{YT}/(V_{YA} \times V_{YB}) \quad (8)$$

As mentioned above, the change in ignition pattern when a characteristics data is replaced is evaluated, so as to extract the characteristics data with the least changes at step 46. Accordingly, an ineffective characteristics data for the character recognition, is extracted. According to the above extraction, it is possible to compare the sum of the deviation ratios $F_X$ and $F_Y$, or to compare either smaller or bigger values of the deviation ratios $F_X$ and $F_Y$.

Besides the investigation of density deviation according to the x and y coordinates of the ignited neurons, the investigation of density deviation by using a regression line is possible. Here, as to the distance from an ignited neuron to a revolutionary straight line: it is deemed to be "$d_A$" when it is an original characteristics data; and it is deemed to be "$d_B$" when one characteristics data is replaced. Also, the mean values with respect to the above distances are deemed to be $\overline{d}_A$ and $\overline{d}_B$, respectively. The density deviation within a class $V_A$ with respect to an original characteristics data is:

$$V_A = \Sigma (d_A - \overline{d}_A)^2 \quad (10)$$

The density deviation within a class $V_B$ when a characteristics data is replaced is:

$$V_B = \Sigma (d_B - \overline{d}_B)^2 \quad (11)$$

The density deviation between classes $V_T$ is:

$$V_T = \Sigma (d_T - \bar{d}_T)^2 \quad (12)$$

Therefore, the deviation ratio F is:

$$F = V_T/(V_A \times V_B) \quad (13)$$

Then, an ineffective characteristics data for the character recognition is extracted according to the above deviation ratio.

The extraction of an ineffective characteristics data for the change in ignition pattern performed at step 43 and step 46 can be performed together with contrast or moment of the texture analysis. It is also possible to investigate the independency of 2 ignition patterns by using Bayse theorem, as a statistics method.

After an ineffective characteristics data for the character recognition is extracted at step 46, the judgment is performed at step 47 whether all prearranged characteristics data extractions are completed or not. According to the present embodiment, the deletion processing of the characteristics data is completed when 4 ineffective characteristics data out of 7 is deleted. On the other hand, when deletion of 4 ineffective characteristics data is not completed, parameter N is increased by "1" at step 48, and returns to step 36. Then similar processing, as it is described above, is performed with respect to the next character, so as to select and delete the ineffective characteristics data.

According to the above, 3 characteristics data are determined so that it is possible to perform character recognition by using 3 characteristics data thereafter. According to the present embodiment, it becomes possible to develop a system easily for the character recognition by using only the effective characteristics data. Furthermore, a character recognition system obtained above enables to reduce the capacity of the neural network to the necessary minimum, so as to simplify the neural network or a data processing system with equivalent structure thereto, since number of employed characteristics data is small.

At step 36, it is possible, for example, to perform pattern matching so as not to read the same character as the previous one when the next character is read.

The above embodiment is for the performance of the selection of the effective characteristics data with respect to the character recognition. However, it is possible to apply similar method to a system for the recognition of the configuration or recognition of written notes.

According to the present invention as mentioned above, it is possible to select characteristics data efficiently, even when the effective characteristics data are not focused enough. Therefore, simplification of a data processing system is possible.

## Claims

1. Data processing method for determining appropriate recognition criteria for a plurality of patterns to be recognized, comprising the steps of:
analyzing a first and a second pattern of the plurality of patterns in accordance with a set of recognition criteria and storing at least for the second pattern the data representing the result of the analyses in respect to each criterion,
supplying the data representing the result of the analysis of the first pattern to a processing system having a structure of a neural network to obtain a characteristical distribution of ignited neurons representing the supplied data,
substituting a portion of said supplied data concerning data obtained for the first pattern in regard to a specific criterion by the respective data portion obtained in regard to the second pattern and determining the changes caused in the distribution of ignited neurons by said substitution,
repeating the substituting step, thereby successively substituting each data portion obtained for the first pattern by the respective data portion obtained for the second pattern,
determining a subset of criteria among said set of criteria, which subset comprises only those criteria which, when substituting the corresponding data portions, have caused the most substantial changes in the distribution of ignited neurons, whereby said subset of criteria may then be used for the recognition of the further patterns of said plurality of patterns.

2. Data processing method according to claim 1, wherein said patterns are characters.

## Patentansprüche

1. Datenverarbeitungsverfahren zum Bestimmen geeigneter Erkennungskriterien für eine Vielzahl von zu erkennenden Mustern mit folgenden Schritten:
Analysieren eines ersten und eines zweiten Musters aus einer Vielzahl von Mustern gemäß einem Satz von Erkennungskriterien und Speichern der Daten von zumindest dem zweiten Muster, die das Ergebnis der Analyse bezüglich jedem Kriterium repräsentieren,
Bereitstellen der das Ergebnis der Analyse repräsentierenden Daten des ersten Musters an ein Verarbeitungssystem, welches eine Struktur eines neuronalen Netzwerkes aufweist, um eine charakteristische Verteilung erregter Neuronen, die die zugeführten Daten repräsentieren, zu erhalten,
Ersetzen eines Teils der zugeführten Daten, welche Daten des ersten Musters bezüglich eines bestimmten Kriteriums betreffen, durch einen entsprechenden Datenabschnitt, der bezüglich des zweiten Musters erhalten wurde und Bestimmen der in der Verteilung der erregten Neuronen durch diese Ersetzung verursachten Veränderungen,

Wiederholen des Schritts des Ersetzens, wobei jeder Datenabschnitt, der für das erste Muster erhalten wurde, durch den entsprechenden Datenabschnitt des zweiten Musters ersetzt wird, Bestimmen eines Untersatzes von Kriterien aus dem Satz von Kriterien, welcher Untersatz nur diejenigen Kriterien enthält, die beim Ersetzen der entsprechenden Datenabschnitte die größten Veränderungen bei der Verteilung erregter Neuronen bewirkt haben,

wobei der Untersatz von Kriterien dann für die Erkennung weiterer Muster aus der Vielzahl von Mustern verwendet werden kann.

2. Datenverarbeitungsverfahren nach Anspruch 1, wobei die Muster Buchstaben sind.


**Revendications**

1. Méthode de traitement de données destinée à la détermination de critères de reconnaissance appropriés pour une pluralité de motifs à reconnaître, comportant les étapes consistant à :

    analyser, d'après un ensemble de critères de reconnaissance, un premier et un second motif parmi la pluralité de motifs et mémoriser au moins pour le second motif les données représentant le résultat de l'analyse eu égard à chaque critère,

    envoyer les données représentant le résultat de l'analyse du premier motif vers un système de traitement ayant la structure d'un réseau neuronal, afin d'obtenir une distribution de neurones allumés caractéristique, qui représente les données envoyées,

    substituer à une partie desdites données envoyées, concernant les données obtenues pour le premier motif eu égard à un critère spécifique, la partie de données respective obtenue eu égard au second motif, et déterminer les modifications engendrées par ladite substitution dans la distribution des neurones allumés,

    répéter l'étape de substitution, en substituant successivement à chaque partie de données obtenue pour le premier motif, la partie de données respective obtenue pour le second motif,

    déterminer un sous-ensemble de critères parmi ledit ensemble de critères, ce sous-ensemble ne comportant que les critères qui engendrent les modifications les plus importantes au niveau de la distribution des neurones allumés, lorsqu'on substitue les parties de données correspondantes,

    de telle sorte que ledit sous-ensemble de critères puisse être ensuite utilisé pour la reconnaissance des autres motifs de ladite pluralité de motifs.

2. Méthode de traitement de données selon la revendication 1, dans laquelle lesdits motifs sont des caractères.

Fig. 1

Fig. 2

( a )　　　　　　( b )

Fig.3

Fig.4